Europäisches Patentamt

(19) European Patent Office

Office européen des brevets

(11) Publication number: **0 058 116**
**B1**

# (12) EUROPEAN PATENT SPECIFICATION

(45) Date of publication of patent specification: **25.07.84**

(51) Int. Cl.³: **C 01 B 31/08**

(21) Application number: **82400194.5**

(22) Date of filing: **04.02.82**

(54) Improved regeneration of caustic impregnated activated carbon.

(30) Priority: **06.02.81 US 231485**

(43) Date of publication of application:
**18.08.82 Bulletin 82/33**

(45) Publication of the grant of the patent:
**25.07.84 Bulletin 84/30**

(84) Designated Contracting States:
**AT BE CH DE FR GB IT LI LU NL SE**

(56) References cited:
**GB - A - 19 357**
**US - A - 4 072 479**

**JOURNAL OF APPLIED CHEMISTRY OF USSR,
vol. 52, no. 11, part 2, November 1979, pages
2404-8, New York (USA); N.YA.YAKUBENYA et
al.: "Reactivation of active carbon by removal of
high-boiling organic substances".**

(73) Proprietor: **CALGON CORPORATION**
**Route 60-Campbell's Run Road**
**Robinson Township Pennsylvania 15205 (US)**

(72) Inventor: **Farmerie, John J.**
**201 Burch Drive**
**Coraopolis Pennsylvania 15108 (US)**

(74) Representative: **Corre, Jacques Denis Paul et al,**
**Cabinet Regimbeau 26, Avenue Kléber**
**F-75116 Paris (FR)**

Courier Press, Leamington Spa, England.

## Description

### Background of the Invention

This invention is directed to a process for the regeneration of activated carbon impregnated with caustic alkali.

This invention especially relates to the regeneration of caustic alkali impregnated activated carbon by a three stage process, involving the use of both a high concentration (30 to 50 percent) and then a low concentration (5 to 25 percent) NaOH or KOH solution.

Activated carbons impregnated with NaOH have been described in U.S. Patent No. 4,072,479 to *Sinha et al*.

Activated carbons impregnated with KOH have been described in U.S. Patent No. 2,872,412 to *McNeil et al* and in *Swinarski et al,* Chem. Stosowana, Ser.A9(3), 287—94 (1965), (Chemical Abstracts, Vol. 64, 1379c).

Caustic alkali impregnated carbons are excellent adsorbents for malodorous sulfur and organic compounds. As used herein, caustic alkali impregnated carbon refers to carbon impregnated with either NaOH or KOH. Caustic alkali, therefore, is defined as NaOH or KOH and may also include any other alkali metal hydroxide. Typical malodorous sulfur containing compounds include principally hydrogen sulfide, mercaptans and sulfides. The malorodous organic compounds include all of those compounds formed by the bacterial breakdown of higher organic compounds, for example, compounds associated with sewer treatment facilities.

Adsorption of such malodorous compounds reduces the effective capacity of the carbon for further adsorption. At some point in time (known as the breakthrough), the carbon becomes spent, that is, it loses its capacity to adsorb. At that point, the carbon must be regenerated.

Prior to the discovery of the three step regeneration process of the present invention, carbons of the type described by *Sinha et al* were regenerated by treatment of the Spent carbon with a 50 percent NaOH solution for at least 18 hours, followed by one water rinse.

In US Patent No. 4,072,479 to *Sinha et al* is also described a process for regenerating NaOH-impregnated activated carbon by treatment with a solution of caustic soda which may be strong or weak.

By using the process of the present invention, a high concentration caustic alkali wash followed by a low concentration caustic alkali wash, improved regeneration of adsorptive capacity of from 10 to 20 percent over the processes of the prior art is achieved.

### Summary of the Invention

The object of this invention is the improved regeneration of the adsorptive capacity of activated carbons impregnated with caustic alkali. This invention allows for longer useful lifetime of the impregnated carbon, inexpensive reagents and convenient modes of operation.

Thus, there is provided a process for the regeneration of spent caustic alkali impregnated activated carbon which comprises treating the spent carbon with caustic alkali and moisture. This process is characterized in effecting the following sequence of process steps: (a) washing the spent carbon with water at a temperature range of from 22.2 to 76.7°C (72° to 170°F); (b) treating the washed spent carbon with a solution of from 30 to 50 percent by weight (high concentration) of caustic alkali at a temperature range of from 22.2 to 82.2°C (72° to 180°F) for a contact time of from 13 to 24 hours to remove organic contaminants; and (c) treating the spent carbon from step (b) with a solution of from 5 to 25 percent by weight (low concentration) of caustic alkali at a temperature range of from 22.2 to 82.2°C (72° to 180°F) for a contact time of from 3 to 24 hours to remove sulfur contaminants.

### Detailed Description

Four parameters have been found to be important in the regeneration of caustic alkali impregnated carbon via the process of this invention: (a) moisture content on the carbon; (b) caustic alkali solution temperature; (c) caustic alkali solution concentrations; and (d) contact times.

Moisture content on the spent carbon prior to regeneration with the caustic alkali solutions is a critical factor in the efficiency of this process. Irrespective of the moisture content on the active carbon, either before or after adsorption, the carbon must be washed prior to regeneration. Washing the carbon increases the removal of both the organic and sulfur contaminants. By definition, washed carbon contains at least 25 weight prcent moisture on the carbon after the washing, while the typical dry carbon contains no more than 18 weight percent moisture. The preferred moisture content on the washed carbon is from 30 to 40 weight percent or at least 25 weight percent. The water wash may be carried out in a temperature range of from 22.2 to 76.7°C (72° to 170°F) with about 48.8°C (120°F) preferred. After regeneration of the carbon, as described below, moisture content on the cabron may be as high as 40 weight percent. Prior to reuse, this moisture content should be reduced to from 18 to 25 weight percent, preferably to less than 18 weight percent.

Sulfur and organic contaminants are removed by two different caustic concentrations. NaOH concentrations between 5 to 25 weight percent were found to be effective for the removal of sulfur

2

contaminants, with 15 to 20 weight percent NaOH the preferred concentration.

Organic contaminants were removed with a NaOH concentration between 30 to 50 weight percent, with 50 weight percent the preferred concentration. KOH concentrations between 5 to 25 weight percent were found to be effective for the removal of sulfur contaminants, with 15 to 25 weight percent KOH the preferred concentration. Organic contaminants were removed with KOH concentrations between 30 to 50 weight percent, with 50 weight percent the preferred concentration.

The temperature of the caustic alkali solutions has a direct effect on contaminant removal efficiency. As the temperature of the caustic solutions increase, the percentage of both sulfur and organic contaminants removed increase. The useful temperature range for both the high and the low concentration caustic alkali solutions is 22.2 to 82.2°C (72° to 180°F) with preferred caustic temperature of 60°C (140°F).

The contact times for the two solutions of NaOH vary from 3 to 24 hours for the low (5 to 25 percent) concentration and from 13 to 24 hours for the high (30 to 50 percent) concentration solution. The preferred contact time for the high concentration solution is about 18 hours. After this time, organic contaminants are removed with decreasing efficiency. The preferred contact time for the removal of sulfur contaminants with the low concentration solution is from 5 to 10 hours. The contact times for the two solutions of KOH vary from 3 to 24 hours for the low concentration and from 13 to 24 hours for the high concentration solutions. The preferred contact times for the low and high concentration KOH solutions are 5 and 18 hours respectively.

Contact time is dependent upon the temperature of the caustic alkali solution, the concentration of the caustic alkali solution and the level of contamination by sulfur and organic compounds on the spent carbon. The suggested and preferred values serve as a guide to those skilled in the art and as parameters for the regeneration of caustic alkali impregnated carbon.

While the description of this process calls for the regeneration of caustic alkali impregnated carbons with either NaOH or KOH solutions, the variety of regeneration combinations will be readily apparent to those skilled in the art of carbon adsorption. For example, NaOH impregnated carbon may be regenerated with either NaOH or KOH solutions, and KOH impregnated carbons may be regenerated with either KOH or NaOH solutions.

Although the present invention is exemplified in conjunction with a small scale static regeneration scheme, it will be readily understood by those skilled in the art of carbon adsorption that the spirit of this invention will readily translate to a carbon recycle scheme or any large "field scale" application without any major deviation from the parameters set forth herein. These examples merely illustrate the process and are not intended to limit the application of this invention in any way.

The process of the present invention can best be understood by reference to the following examples which demonstrate the effect of the four parameters discussed above upon the regeneration of caustic impregnated activated carbon.

In general, the regeneration was carried out in a static mode. Two hundred fifty grams of spent carbon was placed in a 1000 ml erlenmeyer flask with 700 ml caustic alkali solution poured on top (varied concentrations). Samples were held at 22.2°C (72°F) and room conditions for the contact times indicated. Samples at other temperatures were controlled in hot or cold water baths. After the contact time interval passed, the caustic alkali was removed and the carbon twice rinsed with water. Carbon samples were then dried and analysed for the percentage of removed contaminants.

Example I

*Sulfur removal from spent carbon* — sulfur removal was compared using five different NaOH concentrations, all at ambient temperature over four contact times. Results for dry carbon are shown below in Table I.

## TABLE I

### Percent Sulfur Removal for Caustic Alkali Concentration

| NaOH Concentration | Dry Carbon | | | | | Washed | | | |
|---|---|---|---|---|---|---|---|---|---|
| | 0.5 | .15 | .20 | .25 | .50 | 0.5 | 0.15 | .20 | 0.25 |
| **Contact Time** | | | | | | | | | |
| 3 Hours | 62.7 | 68.6 | 67.1 | 66.9 | 40.4 | * | * | 73.1 | * |
| 5 Hours | 68.3 | 75.8 | 72.6 | 70.2 | 48.2 | 61.8 | 75.5 | 79.4 | 75.9 |
| 7 1/2 Hours | 71.2 | 77.1 | 75.2 | 74.6 | 57.0 | * | * | 81.3 | * |
| 24 Hours | 71.6 | 78.0 | 77.0 | 75.5 | 59.4 | 67.4 | 79.2 | 82.5 | 76.8 |

(All percentages are in weight percent sulfur removed)

* Data not collected at this contact time interval.

# 0 058 116

## Example II

*Organic removal from spent carbon* — Two samples of spent carbon were treated at varying concentrations of NaOH for varying contact times to determine the most effective NaOH concentration for removal of organic contaminants. The results of these tests are shown in Tables IIa (low organic level) and IIb (high organic level). Washed carbon data is shown in Table IIc.

### TABLE IIa

Percent Organic Removal for Caustic Concentration on Low
(2.84 Percent) Organic

| NaOH Concentration | .15 | .25 | .50 |
|---|---|---|---|
| Contact Time | | | |
| 6 Hours | 86.62 | 90.49 | 100 |
| 24 Hours | 100 | 100 | 100 |

### TABLE IIb

Percent Organic Removal for Caustic Concentration on High
(9.38 Percent) Organic

| NaOH Concentration | .15 | .25 | .50 |
|---|---|---|---|
| Contact Time | | | |
| 3 Hours | 0 | 0 | 0 |
| 5 Hours | 1.95 | 8.23 | 59.30 |
| 24 Hours | 25.1 | 33.8 | 80.10 |

### TABLE IIc

Percent Removal for Caustic Concentration

| NaOH Concentration | .50 Dry | .50 Caustic to Carbon Low Ratio* Washed (2—1) | .50 Caustic to Carbon High Ratio* Washed (5—1) |
|---|---|---|---|
| Contact Time | | | |
| 3 Hours | 0 | 0 | 0 |
| 5 Hours | 59.30 | 49.68 | 62.65 |
| 24 Hours | 80.10 | 61.32 | 82.84 |

(All percentages are in weight percent organics removed)

\* Dilution factor of caustic by the water retained on the washed carbon.
    (a) low ratio; e.g. — 500 grams carbon to 1000 grams caustic;
    (b) high ratio; e.g. — 500 grams carbon to 2500 grams caustic.

5

### Example III

Two samples of spent impregnated carbon (NaOH) were treated with (a) the three stage process of the present invention using NaOH solutions and (b) the regeneration process of the prior art.

(a) Spent carbon (NaOH), moisture free, containing 7.84 weight percent sulfur and 9.98 weight percent organic contaminants was washed with one bed volume of water at 22.2°C (72°F). The water was drained and the adsorber immediately filled with one bed volume of 50 percent NaOH solution. The caustic solution temperature was held at 22.2°C (72°F), for a contact time of about 18 hours. The caustic solution was removed except for 1/4 bed volume. The absorber was filled with 3/4 bed volume of water producing a 15 percent NaOH solution and the sulfur removal contact time was 5 hours at a temperature of 22.2°C (72°F). The caustic was removed and the adsorbent was washed with two bed volumes of water. The carbon was air dried and ready for reuse. The sulfur removal was 97.5 weight percent and the organic removals was 100 weight percent.

(b) Spent carbon (NaOH), moisture free, containing 7.84 weight percent sulfur and 9.98 weight percent organic contaminants was treated with one bed volume of 50 percent NaOH solution. The caustic solution temperature was held at 22.2° (72°F) for a contact time of 18 hours. The caustic solution was removed and the adsorbent was washed with one bed volume of water. The carbon was air dried and ready for reuse. The sulfur removal was 58.6 weight percent and the organic removal was 98.9 weight percent.

### Example IV

Two samples of spent impregnated carbon (NaOH) were treated with (a) the three stage process of the present invention using KOH solutions and (b) the regeneration process of the prior art.

(a) Spent carbon (NaOH), moisture free, containing 16.0 weight percent sulfur and 8.76 weight percent organic contaminants was washed with one bed volume of water at 76.7°C (170°F). The water was drained and the adsorber immediately filled with one bed volume of 50 percent KOH solution. The caustic solution was held at 22.2°C (72°F) for a contact time of 18 hours. The KOH solution was removed. The adsorber was filled with a 15 percent KOH solution and the sulfur removal contact time was 5 hours at a temperature of 22.2°C (72°F). The caustic was removed and the adsorbent was washed with two bed volumes of water. The carbon was air dried and ready for reuse. The sulfur removal was 81.4 weight percent and the organic removal was 43.2 weight percent.

(b) Spent carbon (NaOH), moisture free, containing 16.0 weight percent sulfur and 8.76 weight percent organic contaminants was washed with one bed volume of water at 76.7°C (170°F). The water was drained and the adsorber immediately filled with one bed volume of 15 percent KOH solution. The caustic solution was held at 22.2°C (72°F) for a contact time of 18 hours. The caustic was removed, the carbon was air dried and ready for reuse. The sulfur removal was 47.8 weight percent and the organic removal was .05 weight percent.

### Claims

1. A process for the regeneration of spent caustic alkali impregnated activated carbon which comprises treating the spent carbon with caustic alkali and moisture characterised in effecting the following sequence of process steps:

(a) Washing the spent carbon with water at a temperature range of from 22.2 to 76.7°C (72 to 170°F).

(b) Treating the washed spent carbon with a solution of from 30 to 50 percent by weight caustic alkali at a temperature range of from 22.2 to 82.2°C (72° to 180°F) for a contact time of from 13 to 24 hours to remove organic contaminants; and

(c) Trating the spent carbon from step (b) with a solution of from 5 to 25 percent by weight caustic alkali at a temperature range of from 22.2 to 82.2°C (72° to 180°F) for a contact time of from 3 to 24 hours to remove sulfur contaminants.

2. The process of Claim 1 wherein the concentration of caustic alkali sufficient to remove organic contaminants is 50 percent by weight and the contact time is about 18 hours at a temperature of 60°C (140°F).

3. The process of Claim 1 wherein the concentration of caustic alkali sufficient to remove sulfur contaminants is from 15 to 20 percent by weight and the contact time is from 5 to 10 hours at a temperature of 60°C (140°F).

4. The process of Claim 1 wherein the caustic alkali is NaOH.

5. The process of Claim 1 wherein the caustic alkali is KOH.

6. The process of Claim 1 wherein the water temperature for washing the spent carbon is 43.9°C (120°F).

### Revendications

1. Procédé de régénération de charbon activé usé imprégné de base caustique dans lequel on traite le charbon usé avec une base caustique et de l'humidité, caractérisé en ce qu'on conduit la séquence suivante d'étapes du procédé:

(a) lavage du charbon usé avec de l'eau à un intervalle de température allant de 22,2 à 76,7°C (72 à 170°F)

(b) traitement du charbon usé lavé avec une solution de 30 à 50% en poids de base caustique à un intervalle de température allant de 22,2 à 82,2°C (72 à 180°F) pendant un temps de contact allant de 13 à 24 heures pour enlever les impuretés organiques; et

(c) traitement du charbon usé de l'étape (b) avec une solution de 5 à 25% en poids de base caustique à un intervalle de température allant de 22,2 à 82.2°C (72 à 180°F) pendant un temps de contact allant de 3 à 24 heures pour enlever les impuretés soufrées.

2. Procédé selon la revendication 1 où la concentration de base caustique suffisante pour enlever les impuretés organiques est de 50% en poids et le temps de contact est d'environ 18 heures à une température de 60°C (140°F).

3. Procédé selon la revendication 1 où la concentration de base caustique suffisante pour enlever les impuretés soufrées est de 15 à 20% en poids et le temps de contact est de 5 à 10 heures à une température de 60°C (140°F).

4. Procédé selon la revendication 1 où la base castique est NaOH.

5. Procédé selon la revendication 1 où la base caustique est KOH.

6. Procédé selon la revendication 1 où la température de l'eau pour laver le charbon usé est de 43,9°C (120°F).

**Patentansprüche**

1. Verfahren zur Regenerierung von verbrauchter, mit Alkalihydroxid imprägnierter Aktivkohle durch Behandeln des verbrauchten Kohlenstoffs mit Alkalihydroxid und Feuchtigkeit, dadurch gekennzeichnet, dass die nachstehende Folge von Verfahrensstufen durchgeführt wird:

(a) Wäsche des verbrauchten Kohlenstoffs mit Wasser in einem Temperaturbereich von 22,2 bis 76,7°C (72 bis 170°F);

(b) Behandeln des gewaschenen verbrauchten Kohlenstoffs mit einer Lösung von 30 bis 50 Gew.-% Alkalihydroxid in einem Temperaturbereich von 22,2 bis 82,2°C (72 bis 180°F), während einer Kontaktzeit von 13 bis 24 h, zur Entfernung organischer Verunreinigungen; und

(c) Behandeln des verbrauchten Kohlenstoffs der Stufe (b) mit einer Lösung von 5 bis 25 Gew.-% Alkalihydroxid in einem Temperaturbereich von 22,2 bis 82,2°C (72 bis 180°F), während einer Kontaktzeit von 3 bis 24 h, zur Entfernung von Schwefelverunreinigungen.

2. Verfahren nach Anspruch 1, bei dem die zur Entfernung organischer Verunreinigungen ausreichende Konzentration an Alkalihydroxid 50 Gew.-% beträgt, und die Kontaktzeit etwa 18 h bei einer Temperatur von 60°C (140°F) beträgt.

3. Verfahren nach Anspruch 1, bei dem die zur Entfernung von Schwefelverunreinigungen ausreichende Konzentration an Alkalihydroxid 15 bis 20 Gew.-% beträgt, und die Kontaktzeit 5 bis 10 h bei einer Temperatur von 60°C (140°F) beträgt.

4. Verfahren nach Anspruch 1, bei dem das Alkalihydroxid NaOH ist.

5. Verfahren nach Anspruch 1, bei dem das Alkalihydroxid KOH ist.

6. Verfahren nach Anspruch 1, bei dem die Wassertemperatur zur Wäsche des verbrauchten Kohlenstoffs 43,9°C (120°F) beträgt.